# EUROPEAN PATENT SPECIFICATION

(11) **EP 4 439 134 B1**
(45) Date of publication and mention of the grant of the patent: **26.02.2025**
(21) Application number: 23175795.6
(22) Date of filing: 26.05.2023
(51) Int. Cl.: G02B 5/00, G02B 5/30

(54) **HIGH CONTRAST GRATING POLARIZER**
KONTRASTREICHES GITTERPOLARISATOR
POLARISEUR À RÉSEAU DE CONTRASTE ÉLEVÉ

(30) Priority: 31.03.2023 CN 202310359461
(43) Date of publication of application: 02.10.2024
(73) Proprietor: ZHEJIANG BERXEL PHOTONICS CO., LTD., Jiaxing City, Zhejiang 314116 (CN)
(72) Inventor: CUI, Yao, Jiaxing City 314116 (CN); CHANG-HASNAIN, Constance Jui-Hua, Jiaxing City 314116 (CN); KAPRAUN, Jonas Horst, Jiaxing City 314116 (CN); JI, Yipeng, Jiaxing City 314116 (CN)
(74) Representative: Cabinet Bleger-Rhein-Poupon

(56) References cited:
- US-A1- 2018 203 170
- US-A1- 2018 329 126
- US-B2- 7 692 860
- US-B2- 9 297 943
- PETROVSKA H A ET AL: "Optimization metal-coated gratings for sensors applications", 2016 IEEE 13TH INTERNATIONAL CONFERENCE ON LASER AND FIBER-OPTICAL NETWORKS MODELING (LFNM), IEEE, 13 September 2016 (2016-09-13), pages 30 - 31, XP033066067, DOI: 10.1109/LFNM.2016.7851220
- HIDAYAT RAHMAT ET AL: "Dual plasmonic modes in the visible light region in rectangular wave-shaped surface relief plasmonic gratings", SCIENTIFIC REPORTS, vol. 13, no. 1, 31 March 2023 (2023-03-31), XP093104744, Retrieved from the Internet <URL:https://www.nature.com/articles/s41598-023-30083-3.pdf> DOI: 10.1038/s41598-023-30083-3

## Description

### Cross Reference to Related Application

The present disclosure claims the benefit of priorities to Chinese patent application No. 202310359461.7, filed on March 31, 2023 to China National Intellectual Property Administration.

### Technical Field

The present disclosure generally relates to the technical field of photoelectric devices, in particular to a high contrast grating polarizer.

### Background

Polarizer is an optical filter that allows light waves of a particular polarization direction to pass through while blocking light waves in other polarization directions. According to different working principles, commercial polarizers can be divided into two categories: one is thin film polarizer and the other is wire-grid polarizer. The thin film polarizer is to arrange the molecular chains of organic compounds along a specific direction, while the wire-grid polarizer is to etch a metal grating periodically on glass and use Maxwell's equations to solve the boundary condition of structure. Compared with thin film polarizers, wire-grid polarizers have higher transmittance, higher extinction ratio, and larger operating temperature range.

However, the difficult fabrication process and high price of wire-grid polarizers in related technologies restrict mass production. According to the principles of metal acting on electromagnetic waves, electromagnetic waves can only interact with it on the surface of metal. For most metals, this skin depth is about 10nm, but the thickness of the current metal grating is generally about 100-300nm (thicker metal grating is just to support the specific structure of the grating. The metal inside does not have any photoelectric action), so there is a large waste of material, and the difficulty of fabrication is also greatly increased. US2018/329126A1 discloses a grating structure.

### Summary

In view of the above shortcomings or deficiencies in related technologies, it is desirable to provide a high contrast grating polarizer with a simple structure and low cost.

The present disclosure provides a high contrast grating polarizer, including:
a substrate; and
a high contrast grating on the substrate and a plasmonic metal antenna structure interleaved with the high contrast grating, where the high contrast grating includes a semiconductor grating or a dielectric grating; and the high contrast grating is configured to transmit light of a first polarization direction, the plasmonic metal antenna structure is configured to reflect light of a second polarization direction, and the first polarization direction is opposite to the second polarization direction.

Optionally, in some embodiments of the present disclosure, the plasmonic metal antenna structure is located in at least one of the bottom, left sidewall and right sidewall of a high contrast grating gap.

Optionally, in some embodiments of the present disclosure, the plasmonic metal antenna structure is located on the top, left sidewall and right sidewall of each high contrast grating bar; or the plasmonic metal antenna structure is located on the top of each high contrast grating bar.

Optionally, in some embodiments of the present disclosure, a first adhesive layer is further provided between the substrate and the high contrast grating, and/or between the substrate and the plasmonic metal antenna structure.

Optionally, in some embodiments of the present disclosure, the first adhesive layer includes any one of a SiN layer, an Al₂O₃ layer, and a SiO₂ layer.

Optionally, in some embodiments of the present disclosure, a second adhesive layer is further provided between the plasmonic metal antenna structure and the high contrast grating, and/or between the plasmonic metal antenna structure and the first adhesive layer.

Optionally, in some embodiments of the present disclosure, the second adhesive layer includes any one of a Ti layer, a Ge layer, and an AI layer.

Optionally, in some embodiments of the present disclosure, the outer surface of the high contrast grating and the outer surface of the plasmonic metal antenna structure are covered with a protective layer.

Optionally, in some embodiments of the present disclosure, grooves of the plasmonic metal antenna structure and/or grooves formed by gaps between the plasmonic metal antenna structure and the high contrast grating are further filled with the protective layer, respectively.

Optionally, in some embodiments of the present disclosure, the protective layer includes any one of a SiN layer, an Al₂O₃ layer, and a SiO₂ layer.

It can be seen from the foregoing technical solution that the embodiments of the present disclosure have the following advantages:

The embodiments of the present disclosure provide a high contrast grating polarizer, in which the high contrast grating is made by semiconductor or dielectric material to replace most metal materials, so the production cost can be greatly decreased; and the plasmonic metal antenna structure interleaved with the high contrast grating can also reduce the grating thickness, so the structure is simple, the fabrication is easy, and meanwhile, the performance is still very close to the traditional wire-grid polarizer.

### Brief Description of Figures

Other features, objectives and advantages of the present disclosure will become more apparent by reading the detailed description of non-limiting embodiments with reference to the accompanying drawings below.
Figure 1 is a schematic structural diagram of a high contrast grating polarizer according to an embodiment of the present disclosure;
Figure 2 is a schematic diagram of S-polarized light incident on a high contrast grating polarizer according to an embodiment of the present disclosure;
Figure 3 is a schematic diagram of E-field simulation of S-polarized light with ϑ equal to 0 deg and *ϕ* equal to 90 deg according to an embodiment of the present disclosure;
Figure 4 is a schematic diagram of P-polarized light incident on the high contrast grating polarizer according to an embodiment of the present disclosure;
Figure 5 is a schematic diagram of E-field simulation of P-polarized light with ϑ equal to 0 deg and *ϕ* equal to 90 deg according to an embodiment of the present disclosure;
Figure 6 is an electron microscope image of a polarizer according to an embodiment of the present disclosure;
Figure 7 is a schematic structural diagram of another high contrast grating polarizer according to an embodiment of the present disclosure;
Figure 8 is a schematic structural diagram of another high contrast grating polarizer according to an embodiment of the present disclosure;
Figure 9 is a schematic structural diagram of another high contrast grating polarizer according to an embodiment of the present disclosure;
Figure 10 is a schematic structural diagram of yet another high contrast grating polarizer according to an embodiment of the present disclosure;
Figure 11 is a schematic structural diagram of yet another high contrast grating polarizer according to an embodiment of the present disclosure;
Figure 12 is a schematic structural diagram of yet another high contrast grating polarizer according to an embodiment of the present disclosure;
Figure 13 is a schematic structural diagram of still another high contrast grating polarizer according to an embodiment of the present disclosure;
Figure 14 is a schematic structural diagram of still another high contrast grating polarizer according to an embodiment of the present disclosure;
Figure 15 is a schematic structural diagram of a high contrast grating polarizer according to another embodiment of the present disclosure;
Figure 16 is a schematic structural diagram of another high contrast grating polarizer according to another embodiment of the present disclosure;
Figure 17 is a schematic structural diagram of another high contrast grating polarizer according to another embodiment of the present disclosure;
Figure 18 is a schematic structural diagram of still another high contrast grating polarizer according to another embodiment of the present disclosure;
Figure 19 is a schematic structural diagram of a high contrast grating polarizer according to another embodiment of the present disclosure;
Figure 20 is a schematic structural diagram of another high contrast grating polarizer according to another embodiment of the present disclosure; and
Figure 21 is a schematic structural diagram of still another high contrast grating polarizer according to another embodiment of the present disclosure.

### Reference numerals:

100 - high contrast grating polarizer, 101 - substrate, 102 - high contrast grating, 103 - plasmonic metal antenna structure, 104 - first adhesive layer, 105 - second adhesive layer, 106 - protective layer, 107 - gap, and 108 - air hole.

### Detailed Description

To make a person skilled in the art understand the solutions in the present disclosure better, the following clearly and completely describes the technical solutions in the embodiments of the present disclosure with reference to the accompanying drawings in the embodiments of the present disclosure. Apparently, the described embodiments are merely some rather than all of the embodiments of the present disclosure.

In the specification and claims of the present disclosure and the foregoing accompanying drawings, the terms "first", "second", "third", "fourth", and the like (if any) are intended to distinguish between similar objects, but do not necessarily describe a specific order or sequence. It should be understood that the data used in this way is interchangeable in appropriate circumstances, so that the described embodiments of the present disclosure can be implemented in other orders than the order illustrated or described herein.

Moreover, the terms "include", "contain" and any other variants mean to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device.

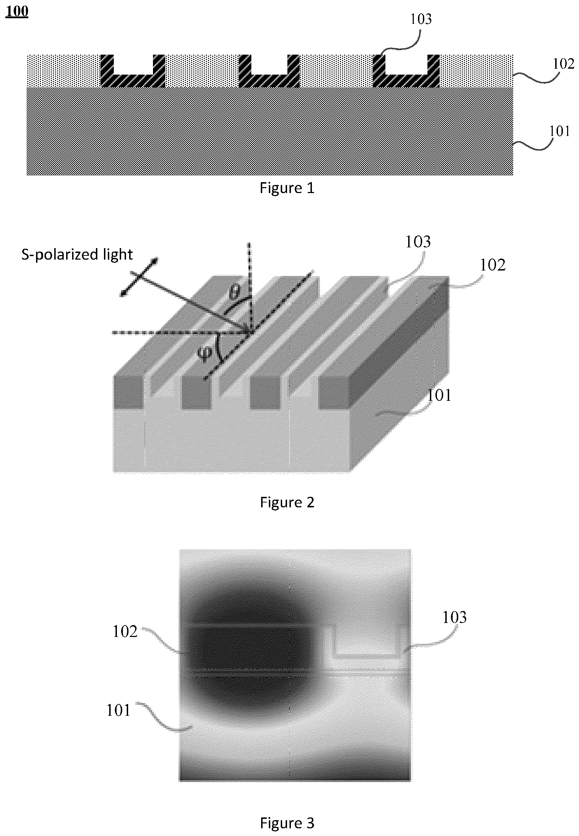

For ease of understanding and explanation, a high contrast grating polarizer according to embodiments of the present disclosure is described in detail below through Figure 1 to Figure 21.

Refer to Figure 1, which is a schematic structural diagram of a high contrast grating polarizer according to an embodiment of the present disclosure. The high contrast grating polarizer 100 includes a substrate 101, a high contrast grating (HCG) 102 on the substrate 101 and a plasmonic metal antenna structure 103 interleaved with the high contrast grating 102, where the high contrast grating 102 can transmit light of a first polarization direction, the plasmonic metal antenna structure 103 can reflect light of a second polarization direction, and the first polarization direction is opposite to the second polarization direction. For example, polarized light includes, but is not limited to, S-polarized light, P-polarized light, circularly polarized light, elliptically polarized light, or the like. Transmitted light is predominantly linearly polarized parallel to high contrast grating bars, and reflected light is predominantly polarized perpendicular to the high contrast grating bars.

Further, as shown in Figure 2, it is a schematic diagram of S-polarized light incident on the high-contrast grating polarizer according to an embodiment of the present disclosure, where the polarized light is incident on grating with angle ϑ, and the *ϕ* is equal to 90 deg. S-polarized light with *ϕ* equal to 90 deg means the E-field direction of light is parallel to grating. In this situation, when the light gets interact with the high contrast grating 102, by designing the special period, duty cycle and thickness of grating, the reflection phase from grating's top and the reflection phase from grating's bottom are different, so it can realize the function to suppress the reflection of light. Meanwhile, since the E-field direction of light is parallel to grating, mostly there is air between grating, so the metal just has little influence on light, and mostly the S-polarized light with *ϕ* equal to 90 deg is getting through the structure. As shown in Figure 3, it is a schematic diagram of E-field simulation of S-polarized light with ϑ equal to 0 deg and *ϕ* equal to 90 deg according to an embodiment of the present disclosure, which can be seen is that light getting pass through the grating.

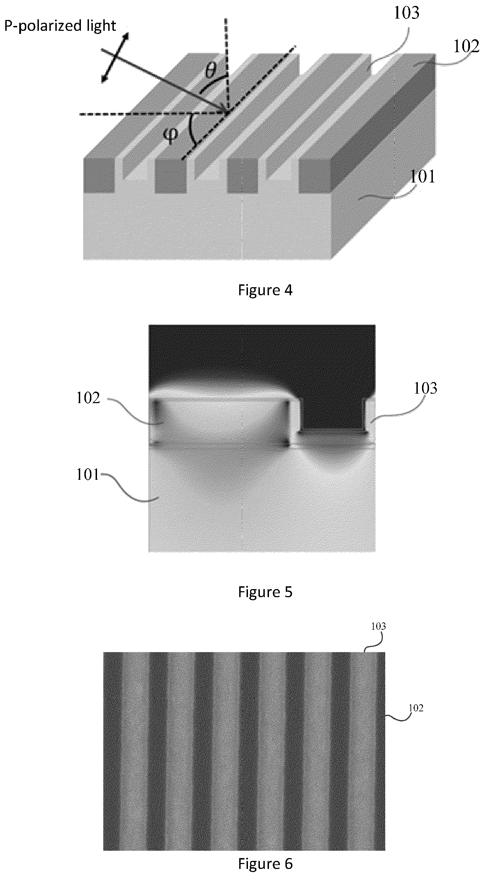

As shown in Figure 4, it is a schematic diagram of P-polarized light incident on the high-contrast grating polarizer according to an embodiment of the present disclosure, where the polarized light is incident on grating with angle ϑ, and the *ϕ* is equal to 90 deg. P-polarized light with *ϕ* equal to 90 deg means the E-field direction of light is perpendicular to grating. In this situation, the light will get large interact with the metal, especially the two sidewalls, the E-field can't penetrate the metal so it will get reflect, the both sidewalls has reflected E-field, so this two E-field will interfere with each other to make the cavity working as an antenna resonator. At last, the light is reflected away, and it can't get pass through the structure. As shown in Figure 5, it is a schematic diagram of E-field simulation of P-polarized light with ϑ equal to 0 deg and *ϕ* equal to 90 deg according to an embodiment of the present disclosure, which can be seen is that light can't get pass through the grating.

It should be noted that the substrate 101 in the embodiment of the present disclosure may be made of one or more materials substantially transparent at the working wavelength of the polarizer. For example, the working wavelength includes, but is not limited to, EUV (extreme ultraviolet), DUV (deep ultraviolet), UV (ultraviolet), VIS (visible), NIR (near infrared), MIR (mid infrared), FIR (far infrared), THz (terahertz), or the like. The materials include, but are not limited to, SiO₂ (silicon dioxide), Al₂O₃ (aluminum oxide), Si (silicon), etc. Alternatively, the substrate 101 may be various types of glasses, amorphous, polycrystalline, crystalline substrates, etc. The high contrast grating 102 includes a semiconductor grating or a dielectric grating, and is made of, for example, Si (silicon), SiN (silicon nitride), Al₂O₃ (aluminum oxide), or any other kind of non-conductive material. The plasmonic metal antenna structure 103 may be any kind of metal, such as Au (gold), Ag (silver), Al (aluminum), Fe (iron), alloy, or other conductive material.

Optionally, the high contrast grating polarizer 100 in the embodiment of the present disclosure may be a periodic structure or aperiodic structure. In other embodiments of the present disclosure, the high contrast grating polarizer 100 may be one-dimensional structure or two-dimensional structure.

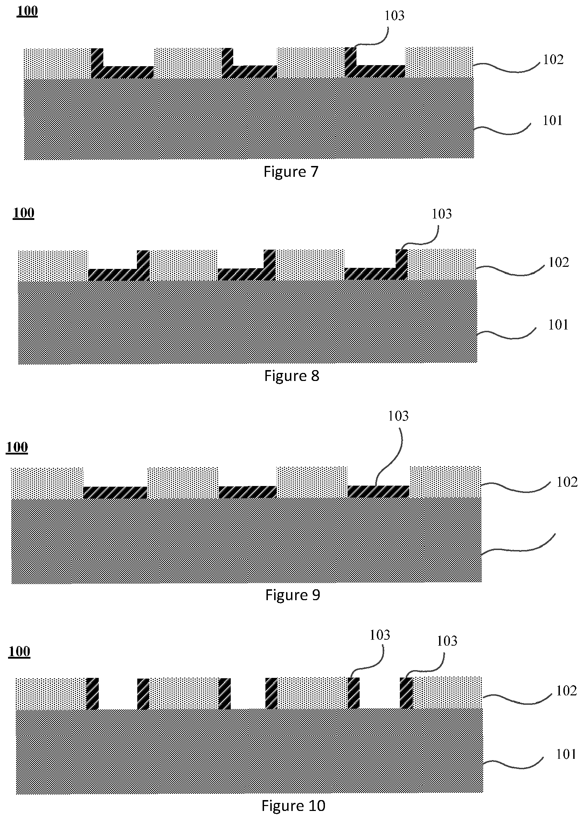

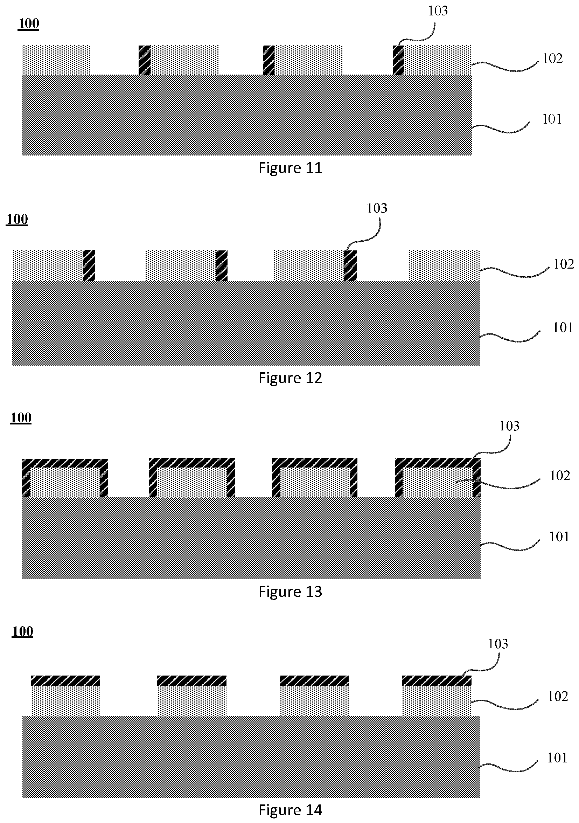

Exemplarily, the plasmonic metal antenna structure 103 in the embodiment of the present disclosure will be described in detail below. For example, the plasmonic metal antenna structure 103 is located in at least one of the bottom, left sidewall and right sidewall of a high contrast grating gap. As shown in Figure 1, the plasmonic metal antenna structure 103 is located on the bottom, left sidewall and right sidewall of the high contrast grating gap. Figure 6 shows an electron microscope image of a polarizer according to an embodiment of the present disclosure, where the dark area represents the high contrast grating 102 and the bright area represents the plasmonic metal antenna structure 103. As shown in Figure 7, the plasmonic metal antenna structure 103 is located on the bottom and left sidewall of the high contrast grating gap. As shown in Figure 8, the plasmonic metal antenna structure 103 is located on the bottom and right sidewall of the high contrast grating gap. As shown in Figure 9, the plasmonic metal antenna structure 103 is located on the bottom of the high contrast grating gap. As shown in Figure 10, the plasmonic metal antenna structure 103 is located on the left sidewall and right sidewall of the high contrast grating gap. As shown in Figure 11, the plasmonic metal antenna structure 103 is located on the left sidewall of the high contrast grating gap. As shown in Figure 12, the plasmonic metal antenna structure 103 is located on the right sidewall of the high contrast grating gap.

For another example, the plasmonic metal antenna structure 103 shown in Figure 13 is located on the top, left sidewall and right sidewall of each high contrast grating bar. Alternatively, the plasmonic metal antenna structure 103 shown in Figure 14 is located on the top of each high contrast grating bar.

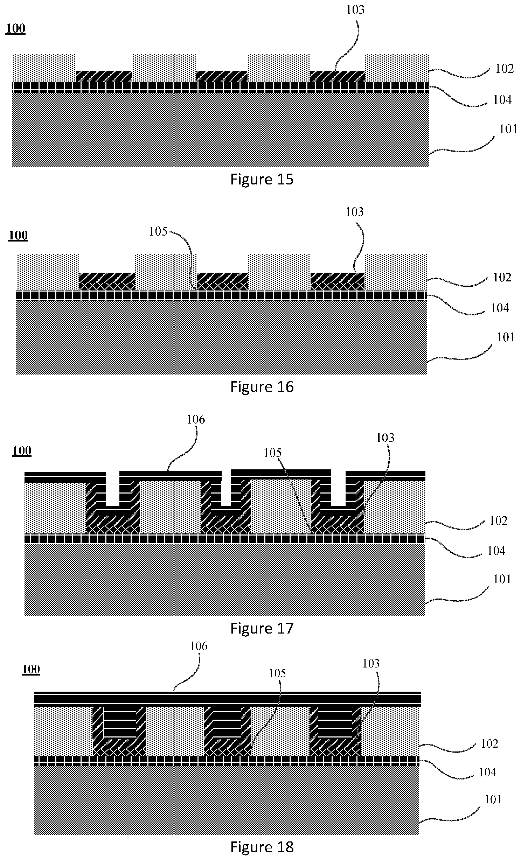

Optionally, in embodiments of the present disclosure, a first adhesive layer 104 is further provided between the substrate 101 and the high contrast grating 102, and/or between the substrate 101 and the plasmonic metal antenna structure 103, thereby enhancing the adhesion of the high contrast grating 102. As shown in Figure 15, a first adhesive layer 104 is provided between the substrate 101 and the high contrast grating 102, and between the substrate 101 and the plasmonic metal antenna structure 103. The first adhesive layer 104 may include any one of a SiN layer, an Al₂O₃ layer, and a SiO₂ layer. During actual production, the first adhesive layer 104 may be deposited by methods like ALD (Atomic Layer Deposition), PECVD (Plasma Enhanced Chemical Vapor Deposition), CVD (Chemical Vapor Deposition), PVD (Physical Vapor Deposition), and others.

Optionally, in embodiments of the present disclosure, a second adhesive layer 105 is further provided between the plasmonic metal antenna structure 103 and the high contrast grating 102, and/or between the plasmonic metal antenna structure 103 and the first adhesive layer 104, thereby enhancing the adhesion of the metal surface. As shown in Figure 16, a second adhesive layer 105 is provided between the plasmonic metal antenna structure 103 and the first adhesive layer 104. The second adhesive layer 105 may include any one of a Ti (titanium) layer, a Ge (germanium) layer, and an Al (aluminum) layer. During actual production, the second adhesive layer 105 may be deposited by methods such as ALD, PECVD, CVD, PVD, sputter and others.

Optionally, as shown in Figure 17, the outer surface of the high contrast grating 102 and the outer surface of the plasmonic metal antenna structure 103 in embodiments of the present disclosure are covered with a protective layer 106. In other embodiments of the present disclosure, grooves of the plasmonic metal antenna structure 103 and/or grooves formed by gaps between the plasmonic metal antenna structure 103 and high contrast grating gaps as shown in Figure 18 are further filled with the protective layer 106 respectively, which can protect the entire polarizer surface, extend its service life, and achieve strong reliability. For example, the protective layer may include any one of a SiN layer, an Al₂O₃ layer, and a SiOz layer, and may be deposited by methods such as ALD, PECVD, CVD, PVD and others.

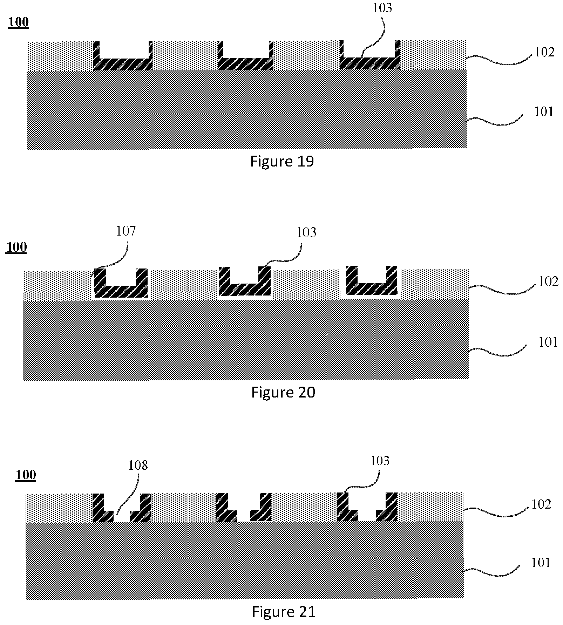

It should also be noted that, as shown in Figure 19, the metal adjacent to one grating sidewall, the metal adjacent to the other grating sidewall, the metal on the bottom of the grating gap, and the metal on the top of the grating in an embodiment of the present disclosure may have different thicknesses. In the polarizer in which the plasmonic metal antenna structure 103 is located on the bottom, left sidewall and right side wall of the high contrast grating gap, a ratio of thicknesses of sidewall metal thickness divided by bottom metal thickness may be larger than 0.2 and less than 3. As shown in Figure 20, there may be a gap 107 between the metal and the high contrast grating 102, and/or between the metal and the substrate 101. The gap 107 should be less than 30nm. As shown in Figure 21, there may be discontinuities in the metal layer, namely, there are air holes 108, and the size of such discontinuities should be smaller than the distance between two gratings.

The embodiments of the present disclosure provide a high contrast grating polarizer, in which the high contrast grating is made by semiconductor or dielectric material to replace most metal materials, so the production cost can be greatly decreased; and the plasmonic metal antenna structure interleaved with the high contrast grating can also reduce the grating thickness, so the structure is simple, the fabrication is easy, and meanwhile, the performance is still very close to the traditional wire-grid polarizer.

Finally, it should be noted that the foregoing embodiments are merely used to describe, but not to limit, the technical solutions of the present disclosure. Although the present disclosure is described in detail with reference to the foregoing embodiments, those of ordinary skill in the art should understand that they may still modify the technical solutions described in the foregoing embodiments, or equivalently substitute some technical features therein.

The invention is defined by the accompanying claims.

## Claims

1. A high contrast grating polariser (100), comprising:
a substrate (101); and
a high contrast grating (102) on the substrate (101) and a plasmonic metal antenna structure (103) interleaved with the high contrast grating (102),
wherein the high contrast grating (102) comprises a semiconductor grating or a dielectric grating; and the high contrast grating (102) is configured to transmit light of a first polarization direction, the plasmonic metal antennastructure (103) is configured to reflect light of a second polarization direction, and the first polarization direction is opposite, or perpendicular, to the second polarization direction;
wherein the plasmonic metal antenna structure (103) is located in at least one of the bottom, left sidewall and right sidewall of a high contrast grating gap;
wherein a first adhesive layer (104) is further provided between the substrate (101) and the high contrast grating (102), and/or between the substrate (101) and the plasmonic metal antenna structure (103).

2. The polarizer according to claim 1, wherein the plasmonic metal antenna structure is located on at least one of the top, left sidewall and right sidewall of each high contrast grating bar; or the plasmonic metal antenna structure is located on the top of each high contrast grating bar.

3. The polarizer according to claim 1, wherein the first adhesive layer comprises any one of a SiN layer, an Al₂O₃ layer, and a SiO2 layer.

4. The polarizer according to claim 1, wherein a second adhesive layer is further provided between the plasmonic metal antenna structure and the high contrast grating, and/or between the plasmonic metal antenna structure and the first adhesive layer.

5. The polarizer according to claim 4, wherein the second adhesive layer comprises any one of a Ti layer, a Ge layer, and an Al layer.

6. The polarizer according to claim 4, wherein the outer surface of the high contrast grating and the outer surface of the plasmonic metal antenna structure are covered with a protective layer.

7. The polarizer according to claim 6, wherein grooves of the plasmonic metal antenna structure and/or grooves formed by gaps between the plasmonic metal antenna structure and the high contrast grating are further filled with the protective layer, respectively.

8. The polarizer according to claim 6, wherein the protective layer comprises any one of a SiN layer, an Al₂O₃ layer, and a SiO₂ layer.

## Patentansprüche

1. Hochkontrastgitterpolarisator (100),umfassend:
ein Substrat (101); und
ein Hochkontrastgitter (102) auf dem Substrat (101) und eine plasmonische Metallantennenstruktur (103), die mit dem Hochkontrastgitter (102) verschachtelt ist, wobei das Hochkontrastgitter (102) ein Halbleitergitter oder ein dielektrisches Gitter umfasst; und das Hochkontrastgitter (102) konfiguriert ist, um Licht einer ersten Polarisationsrichtung durchzulassen, die plasmonische Metallantennenstruktur (103) konfiguriert ist, um Licht einer zweiten Polarisationsrichtung zu reflektieren, und die erste Polarisationsrichtung entgegengesetzt oder senkrecht zu der zweiten Polarisationsrichtung ist,
wobei sich die plasmonische Metallantennenstruktur (103) in mindestens einem des Bodens, der linken Seitenwand und der rechten Seitenwand eines Hochkontrastgitterspalts befindet;
wobei ferner eine erste Klebstoffschicht (104) zwischen dem Substrat (101) und dem Hochkontrastgitter (102) und/oder zwischen dem Substrat (101) und der plasmonischen Metallantennenstruktur (103) bereitgestellt ist.

2. Polarisator nach Anspruch 1, wobei sich die plasmonische Metallantennenstruktur auf mindestens einer der Oberseite, der linken Seitenwand und der rechten Seitenwand jedes Hochkontrastgitterstabs befindet; oder sich die plasmonische Metallantennenstruktur auf der Oberseite von jedem Hochkontrastgitterstab befindet.

3. Polarisator nach Anspruch 1, wobei die erste Klebstoffschicht eine beliebige einer SiN-Schicht, einer Al2O3-Schicht und einer SiO2-Schicht umfasst.

4. Polarisator nach Anspruch 1, wobei ferner eine zweite Klebstoffschicht zwischen der plasmonischen Metallantennenstruktur und dem Hochkontrastgitter und/oder zwischen der plasmonischen Metallantennenstruktur und der ersten Klebstoffschicht bereitgestellt ist.

5. Polarisator nach Anspruch 4, wobei die zweite Klebstoffschicht eine beliebige einer Ti-Schicht, einer Ge-Schicht und einer Al-Schicht umfasst.

6. Polarisator nach Anspruch 4, wobei die Außenoberfläche des Hochkontrastgitters und die Außenoberfläche der plasmonischen Metallantennenstruktur mit einer Schutzschicht bedeckt sind.

7. Polarisator nach Anspruch 6, wobei Rillen der plasmonischen Metallantennenstruktur und/oder Rillen, die durch Spalten zwischen der plasmonischen Metallantennenstruktur und dem Hochkontrastgitter ausgebildet werden, jeweils weiter mit der Schutzschicht gefüllt sind.

8. Polarisator nach Anspruch 6, wobei die Schutzschicht eine beliebige einer SiN-Schicht, einer Al₂O₃-Schicht und einer SiO₂-Shicht umfasst.

## Revendications

1. Polariseur à réseau à contraste élevé (100), comprenant :
un substrat (101) ; et
un réseau à contraste élevé (102) sur le substrat (101) et une structure d'antenne métallique plasmonique (103) entrelacée avec le réseau à contraste élevé (102), dans lequel le réseau à contraste élevé (102) comprend un réseau semi-conducteur ou un réseau diélectrique ; et le réseau à contraste élevé (102) est configuré pour transmettre la lumière d'une première direction de polarisation, la structure d'antenne métallique plasmonique (103) est configurée pour réfléchir la lumière d'une seconde direction de polarisation, et la première direction de polarisation est opposée, ou perpendiculaire, à la seconde direction de polarisation ;
dans lequel la structure d'antenne métallique plasmonique (103) est située dans au moins l'un parmi le fond, la paroi latérale gauche et la paroi latérale droite d'un espace de réseau à contraste élevé ;
dans lequel une première couche adhésive (104) est en outre placée entre le substrat (101) et le réseau à contraste élevé (102), et/ou entre le substrat (101) et la structure d'antenne métallique plasmonique (103).

2. Polariseur selon la revendication 1, dans lequel la structure d'antenne métallique plasmonique est située sur au moins l'un parmi le sommet, la paroi latérale gauche et la paroi latérale droite de chaque barre de réseau à contraste élevé ; ou la structure de l'antenne métallique plasmonique est située au sommet de chaque barre de réseau à contraste élevé.

3. Polariseur selon la revendication 1, dans lequel la première couche adhésive comprend l'une quelconque parmi une couche de SiN, une couche d'Al2O3 et une couche de SiO2.

4. Polariseur selon la revendication 1, dans lequel une seconde couche adhésive est également pourvue entre la structure d'antenne métallique plasmonique et le réseau à contraste élevé, et/ou entre la structure d'antenne métallique plasmonique et la première couche adhésive.

5. Polariseur selon la revendication 4, dans lequel la seconde couche adhésive comprend l'une quelconque parmi une couche de Ti, une couche de Ge et une couche d'AI.

6. Polariseur selon la revendication 4, dans lequel la surface externe du réseau à contraste élevé et la surface externe de la structure d'antenne métallique plasmonique sont recouvertes d'une couche protectrice.

7. Polariseur selon la revendication 6, dans lequel des rainures de la structure d'antenne métallique plasmonique et/ou des rainures formées par des espaces entre la structure d'antenne métallique plasmonique et le réseau à contraste élevé sont remplies avec la couche protectrice, respectivement.

8. Polariseur selon la revendication 6, dans lequel la couche protectrice comprend l'une quelconque parmi une couche de SiN, une couche d'Al₂O₃ et une couche de SiO₂.
